# EUROPÄISCHE PATENTSCHRIFT

(11) **EP 1 544 591 B1**
(45) Veröffentlichungstag und Bekanntmachung des Hinweises auf die Patenterteilung: **30.08.2006**
(21) Anmeldenummer: 04025718.0
(22) Anmeldetag: 29.10.2004
(51) Int. Cl.: G01N 1/12, C21C 1/00, C21C 5/00

(54) **Probennehmer für Flüssigmetalle**
Sampler for liquid metals
Echantillonneur pour métaux liquides

(30) Priorität: 19.12.2003 DE 10360625
(43) Veröffentlichungstag der Anmeldung: 22.06.2005
(73) Patentinhaber: Heraeus Electro-Nite International N.V., 3530 Houthalen (BE)
(72) Erfinder: Knevels, Johan, 3960 Bree (BE); Mingneau, Frank, 3520 Zonhoven (BE); Neyens, Guido, 3680 Opoeteren (BE)
(74) Vertreter: Kühn, Hans-Christian

(56) Entgegenhaltungen:
- EP-A- 0 447 613
- US-A- 3 798 974
- US-A- 4 338 841
- US-A- 4 338 842
- PATENT ABSTRACTS OF JAPAN Bd. 1996, Nr. 03, 29. März 1996 (1996-03-29) & JP 07 306196 A (RIKEN KOGYO KK), 21. November 1995 (1995-11-21)

## Beschreibung

Die Erfindung betrifft einen Probennehmer für Metallschmelzen, insbesondere für Eisen- oder Stahlschmelzen, mit einem Trägerrohr und einer in dem Trägerrohr fixierten Probenkammer mit Einlaufstück für die in die Probenkammer einlaufende Metallschmelze.

Derartige Probennehmer sind aus JP 24340/1971 bekannt. Hier ist ein Probennehmer beschrieben mit einem dickwandigen Einlaufstück, in dessen Wand eine Vorkammer eingearbeitet ist. In JP 83217/1985 ist ein Probennehmer beschrieben mit einer Probenkammer, die eine bauliche Einheit mit dem Material einer Vorkammer bildet. In DE 2714636 C2 ist ein Probennehmer beschrieben mit einem Einlaufrohr, dessen Querschnitt im mittleren Teil des Rohrs durch einseitige Quetschung mehfach verringert ist. Aus EP-A-447613 ist ein Probennehmer bekannt mit einem in einem Einlaufstück angeordneten Einlaufrohr, welches aus Quarzglas gebildet ist.

Weitere Probennehmer sind aus JP 07306196A bekannt. Der hier beschriebene Probennehmer weist ein an seinem Einlaufende in die Probenkammer ein verengtes Einlaufrohr auf. An dieser Einengung kann die Probe von dem Einlaufende getrennt werden.

Der Erfindung liegt die Aufgabe zugrunde, den bekannten Probennehmer zu verbessern, um eine zuverlässige Probennahme zu gewährleisten.

Die Aufgabe wird durch die Merkmale des Hauptanspruchs gelöst. Dadurch, dass in dem (zweckmäßigerweise an die Probenkammer angeformten) Einlaufstück ein Einlaufrohr angeordnet ist, das eine Mündung in die Probenkammer und an seinem anderen Ende eine Einlauföffnung aufweist und die Mündung sowie die Einlauföffnung des Einlaufrohres einen gegenüber dem mittleren Teil des Einlaufrohres verringerten Querschnitt aufweisen, dass das Einlaufrohr aus Quarzglas gebildet ist und dass die Wand des Einlaufrohres an seinen beiden Enden zur Achse des Einlaufrohres hin gekröpft ist, wird die einlaufende Metallschmelze abgebremst, so dass eine Zerstörung der Probenkammer bei der Probennahme weitestgehend verhindert wird. Durch den praktisch doppelwandigen Einlauf ist die Wärmeableitung an dieser Stelle gering, so dass Metallschmelze nicht an der Wand des Einlaufrohres erstarrt. Die Anordnung des Quarzrohres, das eine relativ niedrige Wärmeausdehnung hat, in einem an die Probenkammer angeformten Einlaufstücks ist auch deshalb vorteilhaft, weil dadurch die Trennung der Probe von dem im Einlaufrohr befindlichen Metall zuverlässig gewährleistet wird.

In der Probenkammer kann ein Desoxidationsmittel für die einlaufende Metallschmelze angeordnet sein. Die Probenkammer kann aus zwei vorzugsweise metallischen Halbschalen gebildet sein. Durch die erfindungsgemäße Anordnung wird ein Abschmelzen der Probenkammer oder ein Verkleben der Halbschalen vermieden. Das Einlaufrohr bildet eine Art Vorkammer, die als Mischkammer dient. Darüber hinaus kann es zweckmäßig sein, dass das Einlaufrohr zwischen der Mündung und der Einlauföffnung an mindestens einer Stelle eine Querschnittsänderung, verglichen mit den benachbarten Bereichen des Einlaufrohres aufweist, da dadurch das Trennen der erstarrten Probe von dem erstarrten Material innerhalb des Einlaufrohres zusätzlich begünstigt wird. Vorzugsweise sind die Enden des Quartzrohres im Winkel von etwa 45° gekröpft.

Nachfolgend wird ein Ausführungsbeispiel der Erfindung anhand einer Zeichnung erläutert. In der Zeichnung zeigt:
- Fig. 1: einen Probennehmer im Teilschnitt und
- Fig. 2: einen Querschnitt des Einlaufrohres und der Mündung in die Probenkammer.

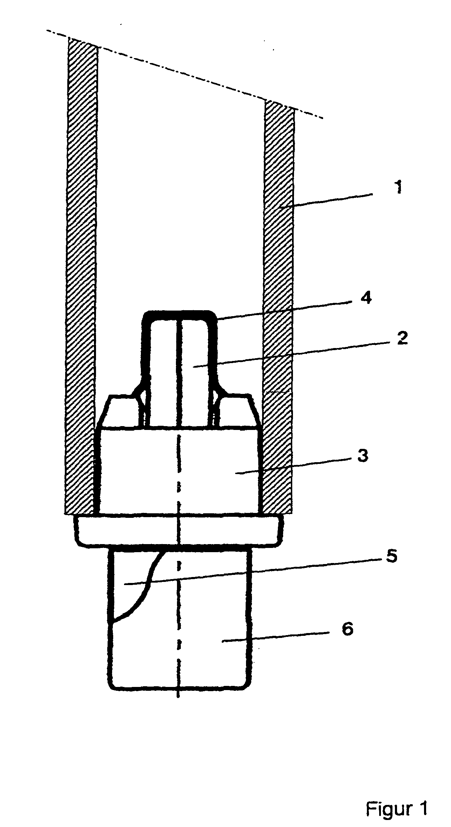

Innerhalb bzw. an einem Trägerrohr 1 ist eine Probenkammer 2 angeordnet (Figur 1). Die Probenkammer 2 ist in bekannter und üblicher Weise aus zwei Halbschalen aus Metall (Stahl) gebildet, wobei die beiden Halbschalen einen nahezu kreisförmigen größeren Querschnitt aufweisen, während der dazu senkrechte Querschnitt etwa rechteckig ist, um zwei möglichst große ebene Analyseflächen an der Probe zu realisieren. Die Probenkammer 2 ist mittels eines Sandkörpers 3 (Gießereisand) in dem Trägerrohr befestigt und die beiden Halbschalen sind mit einer Klammer 4 zusammengehalten. Das Eintauchende des Probennehmers ist mit einer Metallkappe 5 geschlossen, die mit einer weiteren Kappe 6 aus Pappe bedeckt ist.

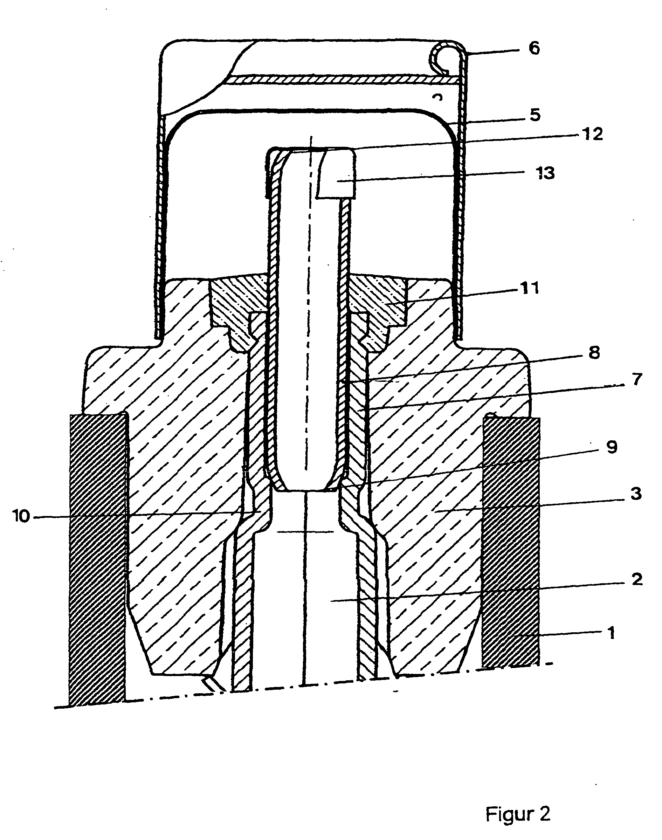

An die Probenkammer 2 schließt sich ein Einlaufstück 7 aus dem gleichen Material unmittelbar an, in welchem ein Einlaufrohr 8 aus Quarzglas angeordnet ist (Figur 2). In diesem Beispiel ist das Einlaufrohr 8 an seiner der Probenkammer 2 zugewandten Mündung 9 durch eine Einengung 10 des Einlaufstücks 7 gehalten. Das Einlaufrohr 8 weist an seiner Mündung 9 einen verringerten Querschnitt auf, der dadurch entstanden ist, dass die Wand des Einlaufrohres 8 in Richtung seiner Achse abgebogen (gekröpft) ist. Die Reduzierung des Radiuses der Mündung 9 gegenüber dem Innenradius des Einlaufrohres 8 ist von der Wandstärke des Einlaufrohres 8 abhängig. Der Abstand von der Mündung 9 bis zur Innenwand der Probenkammer 2 beträgt etwa 5 mm. Das Einlaufstück 7 und das Einlaufrohr 8 sind mittels Zement 11 in dem Sandkör per 3 fixiert. Das zweite Ende des Einlaufrohres 8 ist an der Einlauföffnung 12 in gleicher Weise in seinem Querschnitt verringert wie die Mündung 9. Die Einlauföffnung 12 ist mit einer Stahlkappe 13 bedeckt, die dem Schutz des Einlaufrohres 8 und einer Einlaufverzögerung der Metallschmelze dient. Die Kappen 5;6;13 lösen sich beim Eintauchen der Vorrichtung in die Metallschmelze oder in der Metallschmelze auf, so dass das flüssige Metall durch das Einlaufrohr 8, in dem ein Misch- und Homogenisierungsvorgang stattfindet, in die Probenkammer 2 einlaufen kann.

Die Größe der Querschnittsverringerung der Mündung 9 kann an die jeweilige Anwendung angepasst werden. Je niedriger die Überhitzung der Schmelze ist, je geringer sollte der Durchmesser der Mündung 9 gegenüber dem Innendurchmesser des Einlaufrohres 8 sein. Beispielsweise kann bei Probennahmen aus dem Konverter mit einer Überhitzung von ungefähr 60°C ein funktionsfähiger Probennehmer ausgebildet sein mit einer Reduzierung des Innendurchmessers des Rohres von 8 mm auf 5,5 mm bei einem Außendurchmesser des Rohres von 10 mm.

Bei Verwendung von Einlaufrohren 8 mit einer Wandstärke von mindestens 2 mm kann es sinnvoll sein, eine weitere Durchmesseränderung des Einlaufrohres 8 vorzusehen. Geringere Wandstärken des Einlaufrohres 8 sind jedoch generell vorteilhafter.

Nach dem Einlaufen der Metallschmelze in die Probenkammer 2 beginnt die Schmelze zu erstarren. An dem verringerten Querschnitt der Mündung 9 des Einlaufrohres 8 reißt die erstarrte Metallschmelze, so dass die Probe dem Probennehmer ohne das in dem Einlaufrohr 8 befindliche erstarrte Metall entnommen werden kann.

## Patentansprüche

1. Probennehmer für Metallschmelzen mit einem Trägerrohr und einer in dem Trägerrohr fixierten Probenkammer mit Einlaufstück für die in die Probenkammer einlaufende Metallschmelze, wobei in dem Einlaufstück (7) ein Einlaufrohr (8) angeordnet ist, das eine Mündung (9) in die Probenkammer (2) und an seinem anderen Ende eine Einlauföffnung (12) aufweist und das Einlaufrohr (8) aus Quarzglas gebildet ist, **dadurch gekennzeichnet, dass** die Mündung (9) sowie die Einlauföffnung (12) des Einlaufrohres (8) einen gegenüber dem mittleren Teil des Einlaufrohres (8) verringerten Querschnitt aufweisen und dass die Wand des Einlaufrohres (8) an seinen beiden Enden zur Achse des Einlaufrohres (8) hin gekröpft ist.

2. Probennehmer nach Anspruch 1, **dadurch gekennzeichnet, dass** das Einlaufrohr (8) zwischen der Mündung (9) und der Einlauföffnung (12) an mindestens einer Stelle eine Querschnittsänderung, verglichen mit den benachbarten Bereichen des Einlaufrohres (8) aufweist.

3. Probennehmer nach Anspruch 1 oder 2, **dadurch gekennzeichnet, dass** in dem Einlaufrohr 88) ein Desoxidationsmittel angeordnet ist.

4. Probennehmer nach einem der Ansprüche 1 bis 3, **dadurch gekennzeichnet, dass** die Probenkammer (2) aus zwei vorzugsweise metallischen Halbschalen gebildet ist.

5. Probennehmer nach einem der Ansprüche 1 bis 4, **dadurch gekennzeichnet, dass** die Enden des Quartzrohres im Winkel von etwa 45° gekröpft sind.

## Claims

1. A sampler for metal melts with a carrier tube and a sample chamber fixed in the carrier tube with an intake portion for the metal melts flowing into the sample chamber, wherein an intake tube (8) is positioned in the intake portion (7), which tube has a mouth (9) opening into the sample chamber (2) and an intake port (12) at its other end and the intake tube (8) is formed with quartz glass, **characterized in that** the mouth (9) as well as the intake port (12) of the intake tube (8) have a reduced cross-section relative to the middle portion of the intake tube (8) and that the wall of the intake tube (8) is bent at both of its ends relatively to the axis of the intake tube (8).

2. The sampler according to claim 1, **characterized in that** the intake tube (8) between the mouth (9) and the intake port (12) has at least a change in cross-section at one position, as compared with the neighbouring areas of the intake tube (8).

3. The sampler according to claim 1 or 2, **characterized in that** a deoxidization agent is positioned in the intake tube (8).

4. The sampler according to any of claims 1 to 3, **characterized in that** the sample chamber (2) is formed out of two preferably metal half-shells.

5. The sampler according to any of claims 1 to 4, **characterized in that** the ends of the quartz tube are bent to an angle of about 45°.

## Revendications

1. Echantillonneur pour métal en fusion, comportant un tube porteur et une chambre à échantillons fixée dans le tube porteur avec pièce d'admission pour le métal en fusion entrant dans la chambre à échantillons, et dans la pièce d'admission (7) est agencé un tube d'admission (8) qui présente une embouchure (9) dans la chambre à échantillons (2) et à son autre extrémité une ouverture d'admission (12), et le tube d'admission (8) est réalisé en verre de quartz, **caractérisé en ce que** l'embouchure (9) ainsi que l'ouverture d'admission (12) du tube d'admission (8) présentent une section transversale réduite par rapport à la partie médiane du tube d'admission (8) et **en ce que** la paroi du tube d'admission (8) est coudée à ses deux extrémités vers l'axe du tube d'admission (8).

2. Echantillonneur selon la revendication 1, **caractérisé en ce que** le tube d'admission (8) présente une modification de section transversale en au moins un endroit entre l'embouchure (9) et l'ouverture d'admission (12), en comparaison avec les zones voisines du tube d'admission (8).

3. Echantillonneur selon la revendication 1 ou 2, **caractérisé en ce que** un désoxydant est agencé dans le tube d'admission (8).

4. Echantillonneur selon l'une des revendications 1 à 3, **caractérisé en ce que** la chambre à échantillons (2) est formée par deux demi-coques de préférence métalliques.

5. Echantillonneur selon l'une des revendications 1 à 4, **caractérisé en ce que** les extrémités du tube de quartz sont coudées sous un angle d'approximativement 45°.
